# EUROPEAN PATENT SPECIFICATION

(11) **EP 3 032 222 B1**
(45) Date of publication and mention of the grant of the patent: **07.02.2018**
(21) Application number: 15199297.1
(22) Date of filing: 10.12.2015
(51) Int. Cl.: G01D 5/12, F15B 15/28, G01D 5/14, G01D 11/24, G01B 7/00, G01B 7/02, B64C 25/44, F16D 55/24, F16D 65/18, F16D 66/00

(54) **CONTACTLESS LINEAR POSITION SENSOR SYSTEM**
KONTAKTLOSES LINEARES POSITIONSSENSORSYSTEM
SYSTÈME DE CAPTEUR DE POSITION LINÉAIRE SANS CONTACT

(30) Priority: 11.12.2014 US 201414567906
(43) Date of publication of application: 15.06.2016
(73) Proprietor: Goodrich Corporation, Charlotte, NC 28217-4578 (US)
(72) Inventor: ERICKSON, Staffan, Yellow Springs, OH Ohio 45387 (US); KLODE, Harald, Centerville, OH Ohio 45458 (US); ESSAWY, Magdi, Lakeville, MN Minnesota 55044 (US); SINGH, Donald, Apple Valley, MN Minnesota 55124 (US)
(74) Representative: Iceton, Greg James

(56) References cited:
- DE-A1- 10 313 676
- DE-A1-102005 007 561
- DE-A1-102013 003 270
- US-A1- 2013 293 223
- US-A1- 2014 353 071

## Description

### FIELD

The present disclosure relates to position sensors, and more particularly, to contactless linear position sensors.

### BACKGROUND

Conventional aircraft systems, including braking systems, utilize various types of sensors to relay information to control systems. Such information may include the position of various components relative to other components. Sensors may be used, for example, to relay the linear position of an actuator, such as an electromechanical actuator. Further, such sensors may utilize moving parts or parts that are in physical contact with other parts.

Sensors and their components may become worn or damaged from continued use. Therefore, it may be beneficial to provide sensors of a contactless nature, which may reduce damage or wear associated with moving and contacting components of the
Documents US 2013/293223 A1 and US 2014/353071 A1 show position sensors.

### SUMMARY

In various embodiments, a contactless position sensor system may comprise a piston disposed within a housing having a channel along a portion of an inner surface and configured to be linearly displaced, a magnet coupled to the piston, and a RF-based magnetic sensor positioned within a portion of the channel and configured to detect the position of the magnet within the piston. The magnet may be embedded in a tab coupled to the piston. The RF-based magnetic sensor may comprise an electronic circuit and may also include an antenna. The piston may comprise a fully extended position and a fully retracted position, and the sensor may be configured to detect the linear displacement of the piston between the fully extended position and the fully retracted position.

In various embodiments, a brake system may comprise an electromechanical actuator, a piston configured to be linearly displaced within the housing, and a RF-based magnetic sensor positioned within a channel of the housing and configured to detect a magnetic field of a magnet coupled to the piston. The RF-based magnetic sensor may comprise an electronic circuit and may transmit positional data to a sensor interface, which may process the signal into a linear position in the X direction. The magnet may be embedded in a tab coupled to the piston. The RF-based magnetic sensor may comprise an electronic circuit and may also include an antenna. The piston may comprise a fully extended position and a fully retracted position, and the sensor may be configured to detect the linear displacement of the piston between the fully extended position and the fully retracted position.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by way of example only and by referring to the detailed description and claims when considered in connection with the drawing figures, wherein like numerals denote like elements.
FIG. 1 illustrates a brake system in accordance with various embodiments;
FIGS. 2A-2C illustrate cross sectional views and a top view of a contactless position sensor system in accordance with various embodiments; and
FIG. 3 illustrates a schematic of a contactless position sensor system in accordance with various embodiments.

### DETAILED DESCRIPTION

The detailed description of exemplary embodiments herein makes reference to the accompanying drawings, which show exemplary embodiments by way of illustration and their best mode. While these exemplary embodiments are described in sufficient detail to enable those skilled in the art to practice the disclosure, it should be understood that other embodiments may be realized and that logical changes may be made without departing from the scope of the disclosure. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step.

The present disclosure describes exemplary contactless position sensor systems which may be used in aircraft applications. For example, contactless sensor systems may be utilized with new braking system designs, or retrofitted into existing braking systems. Various potential applications include electromechanical actuators, cockpit pedal sensors, brake accumulators, and multi-position switches, among others. Further, contactless position sensor systems of the present disclosure may be used in systems other than aircraft systems, including any system that utilizes telescoping concentric tubes.

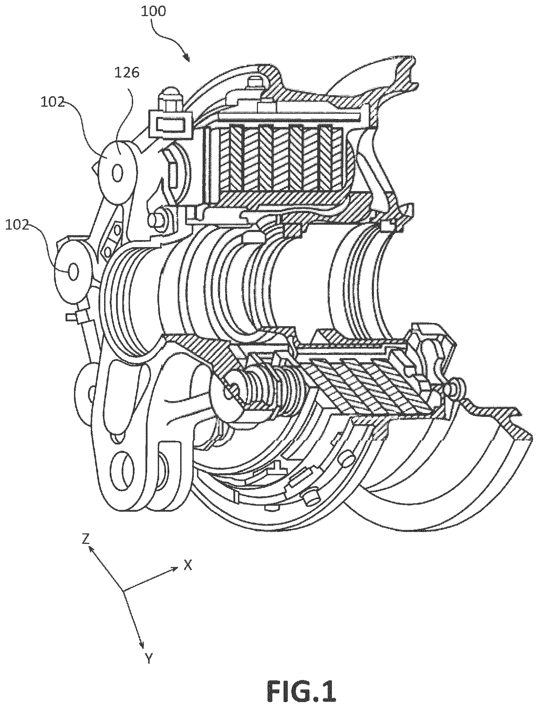

With initial reference to Figure 1, an aircraft braking system 100 may comprise one or more actuators 102. In various embodiments, actuators 102 comprise an electromechanical actuator. For example, actuator 102 may be a ball screw-type actuator comprising a rotating element 126 coupled to and configured to laterally move a piston within actuator 102. Axes in the x, y, and z direction are illustrated for convenience of description. As shown, a piston of actuator 102 may be configured to move along the x axis.

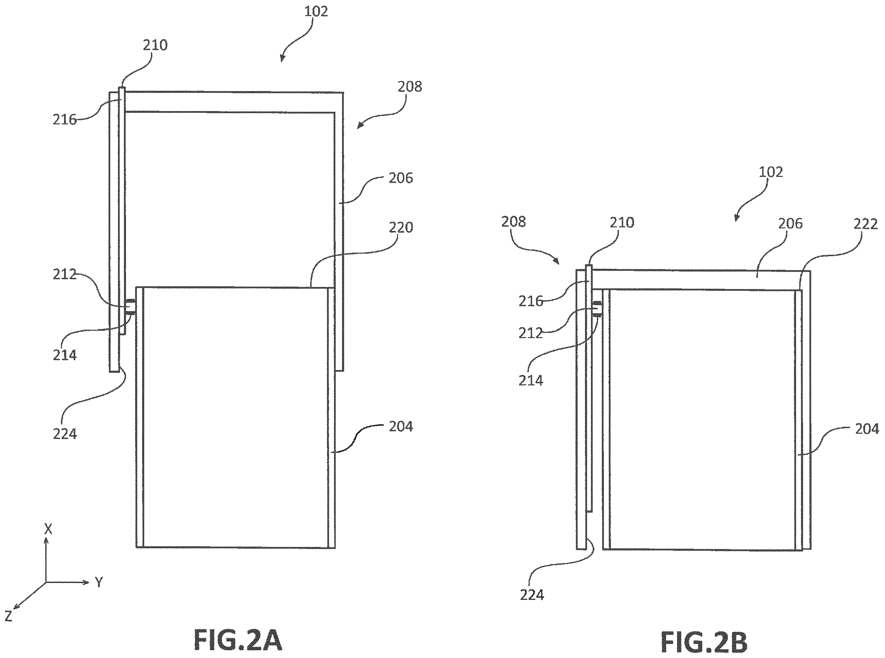

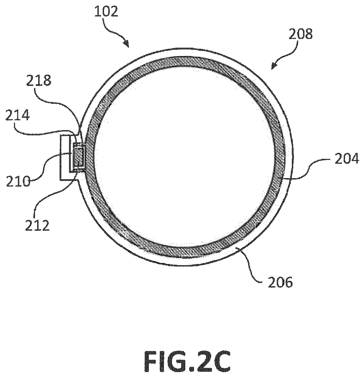

With initial reference to Figures 2A-2C, actuator 102 may comprise a housing 206. In various embodiments, housing 206 may comprise a cylindrical metal housing. For example, housing 206 may comprise a steel cylinder.

Actuator 102 may further comprise a piston 204 located within housing 206. For example, piston 204 may be configured to move linearly, along an X axis, within housing 206. In various embodiments, piston 204 may move linearly between a fully extended position 220 and a fully retracted position 222.

In various embodiments, actuator 102 may comprise a sensor system 208. For example, sensor system 208 may comprise a permanent magnet 212. Magnet 212 may, for example, be coupled to piston 204. In various embodiments, magnet 212 may be embedded in or coupled to a tab 214 located on piston 204. Any manner of coupling magnet 212 and piston 204 is within the scope of the present disclosure.

Housing 206 may define a channel 218 along a portion of an inner surface 224, which may be aligned with tab 214 of piston 204. In various embodiments, piston 204 is positioned such that tab 214 moves linearly (i.e., along the X axis) within housing 206.

Sensor system 208 may further comprise, for example, a sensor 210. In various embodiments, sensor 210 may determine the linear positon (i.e., along the x axis) of piston 204 in a contactless manner. Sensor 210 may, for example, be located within channel 218 of housing 206. In various embodiments, sensor 210 is in proximity to tab 214, which is oriented such that it moves linearly within channel 218. In such embodiments, sensor 210 is aligned with and in proximity to, but not in contact, magnet 212. Sensor 210 may comprise a length in the x direction approximately equal to the range over which the linear position of piston 204 is to be measured. For example, sensor 210 may comprise a length equal to the linear displacement of piston 204 between fully extended position 220 and fully retracted position 222

Sensor 210 may be press-fit or glued into channel 218. However, any manner of securing sensor 210 relative to housing 206 and piston 204 is within the scope of the present disclosure.

In various embodiments, sensor 210 comprises an electronic circuit capable of detecting the position of magnet 212. For example, an electromagnetic effect induced by magnet 212 at certain positions may facilitate detection of the position of magnet 212 by sensor 210. In various embodiments, magnet 212 may impact the shielding characteristics of material (e.g., metal) surrounding an antenna 216 of sensor 210, which may consequently impact an output voltage in sensor 210. The output voltage may then, for example, be interpreted and/or analyzed to determine the position of magnet 212. For example, magnet 212 may decrease the electromagnetic permeability of the material surrounding antenna 216, causing an increased output voltage in sensor 210. The increased output voltage may corresopnd to the position of magnet 212, and therefore, piston 204. However, any manner of detecting the position of magnet 212 by sensor 210 is within the scope of the present disclosure. For example, in various embodiments, sensor 210 comprises a radio frequency (RF) magnet sensor.

Sensor 210 may, for example, be capable of detecting the position of magnet 212 through a material, such as, for example, a metal. For example, magnet 212 may be entirely embedded in tab 214 such that sensor 210 detects magnet 212 through a wall or portion of tab 214. As such, magnet 212 may be protected from adverse environmental conditions (such as, for example, excessive heat, dirt, and/or humidity).

Sensor system 208 may, for example, comprise an antenna 216. Antenna 216 may be electrically coupled to sensor 210. For example, sensor 210 may comprise an electronic circuit including an antenna. In various embodiments, antenna 216 provides data about the linear position of magnet 212, and therefore piston 204, to a component of an aircraft.

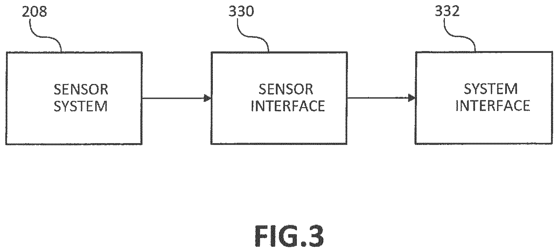

With reference to Figure 3, sensor system 208 may be in data communication with a sensor interface 330. For example, sensor interface 330 may be configured to receive and process data regarding the linear position of piston 204 within housing 206. For example, sensor 210 may transmit positional data to sensor interface 330. Sensor interface 330 may be configured to receive such positional data through a wireless data connection. In further embodiments, sensor interface 330 may be electrically coupled to sensor 210 and/or antenna 216. Any manner of transmitting positional data from sensor 210 to sensor interface 330 is within the scope of the present disclosure.

In various embodiments, sensor interface 330 processes data provided from sensor system 208 to produce data that accurately relates the linear position of piston 204 to a system interface 332. In various embodiments, system interface 332 comprises a control computer within an aircraft. However, system interface 332 can comprise any computer, processing system, controller, or interface capable of receiving linear position data from sensor interface 330.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A contactless position sensor system (208), comprising:
a piston (204) configured to be disposed within a housing (206), the housing comprising a linear protrusion that extends radially outward from an outer surface of the housing (206), wherein a channel (218) is defined in the linear protrusion that is open to an interior volume of the housing and that extends along a portion of an inner surface (224) of the housing;
a magnet (212) coupled to the piston (204); and
a magnetic sensor (210) positioned within the housing and within a portion of the channel (218), wherein the magnetic sensor is configured to detect a linear position of the magnet (212) within the housing (206), wherein the magnetic sensor (210) comprises an electronic circuit, and wherein the magnetic sensor (210) is separated from and physically contactless with the magnet (212).

2. The contactless position sensor system (208) of claim 1, wherein the piston (204) is coupled to a rotating element configured to linearly displace the piston.

3. The contactless position sensor system (208) of claims 1 or 2, further comprising a sensor interface (330), wherein the magnetic sensor (210) transmits a signal to the sensor interface (330), and wherein the sensor (210) processes the signal into a linear position data.

4. The contactless position sensor system (208) of any preceding claim, wherein the magnetic sensor (210) comprises a length equal to or greater than a linear displacement of the piston (204) between a fully extended position and a fully retracted position.

5. The contactless position sensor system (208) of claim 4, wherein the magnetic sensor (210) is configured to detect a linear displacement of the piston (204) between the fully extended position and the fully retracted position.

6. The contactless position sensor system (208) of any preceding claim, wherein the magnetic sensor (210) further comprises an antenna (216).

7. The contactless position sensor system (208) of claim 6, wherein the magnetic sensor (210) is an electronic circuit having an integral antenna.

8. The contactless position sensor system of any preceding claim, wherein the magnet (212) is embedded in a tab (214) coupled to the piston (204).

9. A brake system (100), comprising;
an electromechanical actuator (102); and
the contactless position sensor system of claim 1.

10. The brake system (100) of claim 9, wherein the magnetic sensor (210) comprises an electronic circuit, the electronic circuit configured to convey positional data to a sensor interface.

11. The brake system (100) of claims 9 or 10, wherein the magnet (212) is embedded in a tab (214), and wherein the tab is positioned in the channel (218) of the housing and in proximity to the magnetic sensor (210).

12. The brake system (100) of claims 9-11, wherein the piston (204) is coupled to a rotating element configured to linearly displace the piston.

13. The brake system (100) of claim 10, wherein the electronic circuit of the magnetic sensor comprises an antenna integral with the electronic circuit.

14. The brake system (100) of claims 9-13, wherein the magnetic sensor (210) comprises a length equal to or greater than a linear displacement of the piston (204) between a fully extended position and a fully retracted position.

15. The brake system (100) of claim 14, wherein the magnetic sensor (210) is configured to detect the linear displacement of the piston (204) between the fully extended position and the fully retracted position.

## Patentansprüche

1. Kontaktloses Positionssensorsystem (208), umfassend:
einen Kolben (204), der konfiguriert ist, um in einem Gehäuse (206) angeordnet zu sein, wobei das Gehäuse einen linearen Vorsprung umfasst, der sich von einer Außenfläche des Gehäuses (206) radial nach außen erstreckt, wobei ein Kanal (218) in dem linearen Vorsprung definiert ist, der zu einem Innenvolumen des Gehäuses hin offen ist und sich entlang eines Abschnitts einer Innenfläche (224) des Gehäuses erstreckt;
einen Magnet (212), der mit dem Kolben (204) gekoppelt ist; und
einen Magnetsensor (210), der innerhalb des Gehäuses und innerhalb eines Abschnitts des Kanals (218) positioniert ist, wobei der Magnetsensor konfiguriert ist, um eine lineare Position des Magneten (212) innerhalb des Gehäuses (206) zu erfassen, wobei der Magnetsensor (210) eine elektronische Schaltung umfasst, und wobei der Magnetsensor (210) von dem Magneten (212) getrennt und physikalisch kontaktlos ist.

2. Kontaktloses Positionssensorsystem (208) nach Anspruch 1, wobei der Kolben (204) mit einem rotierenden Element gekoppelt ist, das konfiguriert ist, um den Kolben linear zu verschieben.

3. Kontaktloses Positionssensorsystem (208) nach Anspruch 1 oder 2, weiter umfassend eine Sensorschnittstelle (330), wobei der Magnetsensor (210) ein Signal an die Sensorschnittstelle (330) überträgt, und wobei der Sensor (210) das Signal in lineare Positionsdaten verarbeitet.

4. Kontaktloses Positionssensorsystem (208) nach einem der vorhergehenden Ansprüche, wobei der Magnetsensor (210) eine Länge umfasst, die gleich oder größer als eine lineare Verschiebung des Kolbens (204) zwischen einer vollständig ausgefahrenen Position und einer vollständig eingefahrenen Position ist.

5. Kontaktloses Positionssensorsystem (208) nach Anspruch 4, wobei der Magnetsensor (210) konfiguriert ist, um eine lineare Verschiebung des Kolbens (204) zwischen der vollständig ausgefahrenen Position und der vollständig eingefahrenen Position zu erfassen.

6. Kontaktloses Positionssensorsystem (208) nach einem der vorhergehenden Ansprüche, wobei der Magnetsensor (210) weiter eine Antenne (216) umfasst.

7. Kontaktloses Positionssensorsystem (208) nach Anspruch 6, wobei der Magnetsensor (210) eine elektronische Schaltung mit einer integralen Antenne aufweist.

8. Kontaktloses Positionssensorsystem nach einem der vorhergehenden Ansprüche, wobei der Magnet (212) in eine Lasche (214) eingebettet ist, die mit dem Kolben (204) gekoppelt ist.

9. Bremssystem (100), umfassend;
ein elektromechanisches Stellglied (102); und
das kontaktlose Positionssensorsystem nach Anspruch 1.

10. Bremssystem (100) nach Anspruch 9, wobei der Magnetsensor (210) eine elektronische Schaltung umfasst, wobei die elektronische Schaltung konfiguriert ist, um Positionsdaten an eine Sensorschnittstelle zu übertragen.

11. Bremssystem (100) nach Anspruch 9 oder 10, wobei der Magnet (212) in eine Lasche (214) eingebettet ist, und wobei die Lasche in dem Kanal (218) des Gehäuses und in der Nähe des Magnetsensors (210) positioniert ist.

12. Bremssystem (100) nach den Ansprüchen 9-11, wobei der Kolben (204) mit einem rotierenden Element gekoppelt ist, das konfiguriert ist, um den Kolben linear zu verschieben.

13. Bremssystem (100) nach Anspruch 10, wobei die elektronische Schaltung des Magnetsensors eine mit der elektronischen Schaltung integrale Antenne umfasst.

14. Bremssystem (100) nach den Ansprüchen 9-13, wobei der Magnetsensor (210) eine Länge aufweist, die gleich oder größer als eine lineare Verschiebung des Kolbens (204) zwischen einer vollständig ausgefahrenen Position und einer vollständig eingefahrenen Position ist.

15. Bremssystem (100) nach Anspruch 14, wobei der Magnetsensor (210) konfiguriert ist, um die lineare Verschiebung des Kolbens (204) zwischen der vollständig ausgefahrenen Position und der vollständig eingefahrenen Position zu erfassen.

## Revendications

1. Système de capteur de position sans contact (208), comprenant :
un piston (204) configuré pour être disposé à l'intérieur d'un boîtier (206), le boîtier comprenant une saillie linéaire qui s'étend radialement vers l'extérieur à partir d'une surface extérieure du boîtier (206), dans lequel un canal (218) est défini dans la saillie linéaire qui est ouverte à un volume intérieur du boîtier et qui s'étend le long d'une partie d'une surface intérieure (224) du boîtier ;
un aimant (212) couplé au piston (204) ; et
un capteur magnétique (210) positionné à l'intérieur du boîtier et à l'intérieur d'une partie du canal (218), dans lequel le capteur magnétique est configuré pour détecter une position linéaire de l'aimant (212) à l'intérieur du boîtier (206), dans lequel le capteur magnétique (210) comprend un circuit électronique, et dans lequel le capteur magnétique (210) est séparé de et sans contact physique avec l'aimant (212).

2. Système de capteur de position sans contact (208) selon la revendication 1, dans lequel le piston (204) est couplé à un élément rotatif configuré pour déplacer linéairement le piston.

3. Système de capteur de position sans contact (208) selon les revendications 1 ou 2, comprenant en outre une interface de capteur (330), dans lequel le capteur magnétique (210) transmet un signal à l'interface de capteur (330), et dans lequel le capteur (210) traite le signal dans des données de position linéaire.

4. Système de capteur de position sans contact (208) selon une quelconque revendication précédente, dans lequel le capteur magnétique (210) comprend une longueur égale ou supérieure à un déplacement linéaire du piston (204) entre une position complètement étendue et une position complètement rétractée.

5. Système de capteur de position sans contact (208) selon la revendication 4, dans lequel le capteur magnétique (210) est configuré pour détecter un déplacement linéaire du piston (204) entre la position complètement étendue et la position complètement rétractée.

6. Système de capteur de position sans contact (208) selon une quelconque revendication précédente, dans lequel le capteur magnétique (210) comprend en outre une antenne (216).

7. Système de capteur de position sans contact (208) selon la revendication 6, dans lequel le capteur magnétique (210) est un circuit électronique ayant une antenne intégrée.

8. Système de capteur de position sans contact selon une quelconque revendication précédente, dans lequel l'aimant (212) est intégré dans une languette (214) couplée au piston (204).

9. Système de freinage (100), comprenant :
un actionneur électromécanique (102) ; et
le système de capteur de position sans contact selon la revendication 1.

10. Système de freinage (100) selon la revendication 9, dans lequel le capteur magnétique (210) comprend un circuit électronique, le circuit électronique étant configuré pour transporter des données de position vers une interface de capteur.

11. Système de freinage (100) selon les revendications 9 ou 10, dans lequel l'aimant (212) est intégré dans une languette (214), et dans lequel la languette est positionnée dans le canal (218) du boîtier et à proximité du capteur magnétique (210).

12. Système de freinage (100) selon les revendications 9 à 11, dans lequel le piston (204) est couplé à un élément rotatif configuré pour déplacer linéairement le piston.

13. Système de freinage (100) selon la revendication 10, dans lequel le circuit électronique du capteur magnétique comprend une antenne intégrée au circuit électronique.

14. Système de freinage (100) selon les revendications 9 à 13, dans lequel le capteur magnétique (210) comprend une longueur égale ou supérieure à un déplacement linéaire du piston (204) entre une position complètement étendue et une position complètement rétractée.

15. Système de freinage (100) selon la revendication 14, dans lequel le capteur magnétique (210) est configuré pour détecter le déplacement linéaire du piston (204) entre la position complètement étendue et la position complètement rétractée.
